# EUROPEAN PATENT APPLICATION

(11) **EP 4 691 811 A1**
(43) Date of publication of application: **11.02.2026**
(21) Application number: 23929818.5
(22) Date of filing: 11.09.2023
(51) Int. Cl.: B60G 17/04, B60N 2/52, B60G 17/015, B60C 23/16

(54) **INTEGRATED ADJUSTING SYSTEM AND VEHICLE**

(30) Priority: 31.03.2023 CN 202310365156
(71) Applicant: BYD Company Limited, Shenzhen, Guangdong 518118 (CN)
(72) Inventor: GUAN, Zhuohui, Shenzhen, Guangdong 518118 (CN); LIAO, Yinsheng, Shenzhen, Guangdong 518118 (CN); ZHANG, Hongzhou, Shenzhen, Guangdong 518118 (CN); ZHANG, Feng, Shenzhen, Guangdong 518118 (CN); CHEN, Jinying, Shenzhen, Guangdong 518118 (CN)
(74) Representative: Mathys & Squire
(86) International application number: PCT/CN2023/118044
(87) International publication number: WO 2024/198244

(57) **Abstract**

Disclosed in the present disclosure are an integrated adjusting system and a vehicle. The system is applied to the vehicle, and comprises: a first air receiving device and a second air receiving device, the first air receiving device being configured to implement a first function, the second air receiving device being configured to implement a second function, and the first function and the second function being different; and an air supply device, the air supply device being connected to the first air receiving device so as to supply air to the first air receiving device, the air supply device being connected to the second air receiving device so as to supply air to the second air receiving device , the air supply device being connected to an air inlet pipe (21), and the air inlet pipe (21) being suitable for drawing air from the inside of a vehicle compartment.

## Description

### CROSS-REFERENCE TO RELATED DISCLOSURES

The present disclosure claims priority to Chinese Patent Disclosure No. 202310365156.9, filed by BYD COMPANY LIMITED, on March 31, 2023, titled "Integrated Adjusting System And Vehicle ".

### FIELD

The present disclosure relates to the field of vehicle adjustment technologies, and in particular, to an integrated adjusting system and a vehicle.

### BACKGROUND

In the related art, the seats of a vehicle can be adjusted in the horizontal position and height to accommodate various occupants. The suspension system of the vehicle adjusts the height by means of an air suspension. However, the structures of the seat adjusting system and the air suspension are complex, and they occupy a large amount of internal space of the vehicle.

Furthermore, the air intakes of the seat adjusting system and the air suspension are usually arranged outside the vehicle compartment. The quality of the air is greatly affected by the external environment of the vehicle compartment, which is likely to cause damage to the vehicle.

### SUMMARY

The present disclosure is intended to solve at least one of the technical problems existing in the prior art.

To this end, the present disclosure provides an integrated adjusting system.

According to a first aspect of the present disclosure, an integrated adjusting system is arranged, which is applied to a vehicle, and the system includes: a first air receiving device and a second air receiving device, the first air receiving device is configured to implement a first function, the second air receiving device is configured to implement a second function, the first function and the second function are different; an air supply device, the air supply device is connected to the first air receiving device so as to supply air to the first air receiving device, the air supply device is connected to the second air receiving device so as to supply air to the second air receiving device, the air supply device is connected to an air inlet pipe, and the air inlet pipe is suitable for drawing air from the inside of a vehicle compartment.

According to a second aspect of the present disclosure, a vehicle is provided, which includes the above-mentioned integrated adjusting system.

The technical effects of this disclosure are that the seat adjusting device and the suspension device share one air supply device, which significantly reduces the total volume of the integrated adjusting system, and saves the internal space of the vehicle, and reduces the cost of the vehicle.

In addition, the inlet pipe draws air from inside the vehicle compartment, which can ensure that the air entering the integrated adjusting system is clean and avoid the integrated adjusting system from being contaminated or damaged.

The additional aspects and advantages of the present disclosure will be partly described below, and will in part become evident from the following description, or may be understood through the practice of the present disclosure.

### BRIEF DESCRIPTION OF THE DRAWINGS

FIG. 1 is a schematic diagram of an integrated adjusting system according to an embodiment of the present disclosure;
FIG. 2 is a schematic diagram of another integrated adjusting system according to an embodiment of the present disclosure.

### DETAILED DESCRIPTION

The following provides a detailed description of the embodiments of the present disclosure, along with examples of these embodiments shown in the accompanying drawings. In which the identical or similar reference numerals denote identical or similar components, or components having identical or similar functions. The embodiments described below with reference to the drawings are merely exemplary, are intended to explain the present disclosure and cannot be construed as a limitation on the present disclosure.

In the description of the present disclosure, it should be understood that the orientation or positional relationships indicated by terms such as "center", "longitudinal", "transverse", "length", "width", "upper", "lower", "front", "rear", "left", "right", "vertical", "horizontal", "top", "bottom", "inner", "outer", "circumferential", etc. are based on the orientation or positional relationships shown in the accompanying drawings, and are merely for the convenience of describing the present disclosure and simplifying the description. They do not indicate or imply that the referred device or element must have a specific orientation, be constructed and operated in a specific orientation, and thus should not be construed as a limitation on the present disclosure.

In the description of the present disclosure, unless otherwise clearly stipulated and defined, the terms "install", "connect", "link", "fix" should be understood in a broad sense. For example, they can mean a fixed connection, a detachable connection, or an integral connection; they can be a mechanical connection or an electrical connection; they can be directly connected or indirectly connected through an intermediate medium, and can also mean the internal communication between two elements or the interaction relationship between them. For those of ordinary skill in the art, they can understand the specific meanings of the above terms in the present disclosure according to specific circumstances.

According to an embodiment of the present disclosure, an integrated adjusting system is provided, the integrated adjusting system comprises: a first air receiving device and a second air receiving device, the first air receiving device is configured to implement a first function, the second air receiving device is configured to implement a second function, the first function and the second function are different; an air supply device, the air supply device is connected to the first air receiving device so as to supply air to the first air receiving device, the air supply device is connected to the second air receiving device so as to supply air to the second air receiving device. The air supply device is connected to an air inlet pipe 21, and the air inlet pipe 21 is suitable for drawing air from the inside of a vehicle compartment.

The air supply device is used to supply air at set pressures. The air may be, for example, nitrogen, compressed air, inert gas, etc. The first air receiving device and the second air receiving device are air receiving devices. The first air receiving device uses the air to implement a first function. The second air receiving device uses the air to implement a second function. The first function and the second function may be, for example, vehicle body height adjustment, seat position adjustment, horn sounding, valve control, etc.

The vehicle compartment can be, for example, the cockpit, the luggage compartment, etc. The air intake of the inlet pipe 21 is located inside the vehicle compartment. When the integrated adjusting system is in operation, the air supply device draws air from the inside of the vehicle compartment.

In general, the external environment of the vehicle is complex. For example, the quality of the air in the external environment is unstable, with high dust content, high humidity, and high content of toxic and harmful substances, etc. If the intake of the inlet pipe 21 were placed outside the vehicle, it might cause damage to the air compressor 4, the air spring 6, and the airbag.

However, the air inside the vehicle compartment is usually filtered by the vehicle's air filter, so the quality of the air is stable and the content of harmful components is low. In this example, setting the air intake of the inlet pipe 21 inside the vehicle compartment can avoid damage to the air compressor 4, the suspension device, the airbag, and the first air storage unit 9 caused by poor air quality.

A filter is arranged on the inlet pipe 21. The filter can filter the air inside the vehicle compartment, thereby ensuring the good quality of the air entering the air supply device.

In this example, the first air receiving device and the second air receiving device share one air supply device, which significantly reduces the total volume of the integrated adjusting system, saves the internal space of the equipment (such as a vehicle) where the integrated adjusting system is located, and reduces the cost of the equipment where the integrated adjusting system is located.

In addition, the inlet pipe 21 draws air from the inside of the vehicle compartment, which can ensure that the air entering the integrated adjusting system is clean and avoid the integrated adjusting system from being contaminated or damaged.

In one example, the first air receiving device is one of a suspension device, a seat adjusting device, and a tire inflation device; the second air receiving device is one of a suspension device, a seat adjusting device, and a tire inflation device.

In this example, the air supply device can supply air to at least one of the suspension device and the seat adjusting device.

The seat adjusting device is used to adjust the side wings of the seat to adjust the posture of the occupant when the vehicle is turning, reduce the inclination of the occupant, and improve the driving experience. The suspension device is used to adjust the height of the vehicle body according to the road conditions to ensure the vehicle's passability, and reduce the vehicle's air resistance, etc.

In this disclosure, the air supply device is used to supply high-pressure air for use by the seat adjusting device and the suspension device. The pressure of the air is set according to actual needs.

Of course, those skilled in the art can set the air supply device according to actual needs and are not limited to the above-mentioned embodiments.

Both the seat adjusting device and the suspension device are supported by high-pressure air to adjust the seat and the vehicle body respectively.

The seat adjusting device comprises an airbag. The airbag abuts against the seat (such as the side wings of the seat). After the airbag is inflated, its volume expands and squeezes the seat, thereby changing the shape of the seat. After the airbag is deflated, its volume shrinks and no longer squeezes the seat, and the seat returns to its initial state.

The suspension device comprises an air spring 6. The air spring 6 expands in volume as the air pressure increases to provide the force for lifting the vehicle body, thereby increasing the height of the vehicle body. As the air pressure decreases, the height of the vehicle body gradually decreases.

In the prior art, to supply air to the airbag, an air compressor 4 usually needs to be set independently. The air compressor 4 is connected to the airbag. To supply air to the air spring 6, an air compressor 4 is usually set independently, and the air compressor 4 is connected to the air spring 6; or an air compressor 4 and an air storage tank are set independently, and the air compressor 4 supplies air to the air storage tank, and the air storage tank supplies high-pressure air to the air spring 6. Two sets of air compressors 4 and air storage tanks greatly increase the volume of the two systems and occupy the internal space of the vehicle.

The tire inflation device is used to inflate the vehicle tires. For example, the tire inflation device comprises an inflation pipeline and a wheel-side valve, and the inflation pipeline is connected to the wheel-side valve. The inflation pipeline is connected to the air supply device. The wheel-side valve is used to control the opening and closing of the air port of the tire.

When one of the first air receiving device and the second air receiving device is a seat adjusting device and the other is a suspension device, the seat adjusting device and the suspension device share one air supply device. This significantly reduces the total volume of the integrated adjusting system, and saves the internal space of the vehicle, and reduces the cost of the vehicle.

In addition, the usage frequency of the suspension device is much lower than that of the seat adjusting device. The integrated adjusting device can ensure a relatively high usage frequency of the air supply device, avoiding idle losses of the air supply device caused by longterm non-use.

Moreover, the suspension device usually adjusts the height of the vehicle body when the vehicle is stationary or adjusts the height of the vehicle body according to the change of the vehicle speed during straight driving. The seat adjusting device is usually used when the vehicle is turning. Therefore, the functions of the suspension device and the seat adjusting device do not overlap in terms of usage time, enabling the air supply device to be used to its maximum extent.

In addition, since the operations of both the suspension device and the seat adjusting device are related to the motion state of the vehicle, the control of the suspension device and the seat adjusting device can be achieved through one control device to coordinate the control of multiple functional modules (such as multiple solenoid valves and pressure sensors), thereby enabling better scheduling of the resources of the control device and coordination of the control strategies.

Furthermore, for the suspension device and the seat adjusting device, since both are triggered and controlled based on the position state and acceleration state of the vehicle, the vehicle-wide signals only need to be sent once instead of multiple times, saving the computing resources of the vehicle control device and improving the operation efficiency of the vehicle-wide system.

Moreover, since the control of the two systems can be achieved through one control device, for example, the functions of the seat adjusting device can be integrated into the control device of the suspension device. Therefore, there is no need to equip two independent control devices, which can save the cost of the vehicle.

In one example, in the first state, the air supply device is configured to supply air to the first air receiving device; in the second state, the air supply device is configured to supply air to the second air receiving device; in the third state, the air supply device is configured to supply air to both the first air receiving device and the second air receiving device.

In this example, by controlling different working states, multiple air supply modes of the air supply device can be realized.

In one example, the air supply device comprises an air generating unit and a first air storage unit, and the air generating unit is configured to supply air to the first air storage unit to ensure that the first air storage unit supplies air to the first air receiving device and/or the second air receiving device.

For example, the air generating unit is an air compressor 4. Certainly, it can also be a nitrogen compressor, an inert gas compressor, etc. The first air storage unit is used to store air. For example, the first air storage unit is an air storage tank. In this example, the first air storage unit can store air to supply air to the first air receiving device and/or the second air receiving device. In this way, the first air storage unit can store air at set pressures. Compared with the air generating unit, the first air storage unit can continuously supply a large amount of air. When the air supply is intermittent, it avoids the frequent opening and closing of the air generating unit.

In one example, the air supply device comprises an air generating unit, a first air storage unit and a second air storage unit. The air generating unit is configured to supply air to the first air storage unit, and the air generating unit or the first air storage unit is configured to supply air to the second air storage unit.

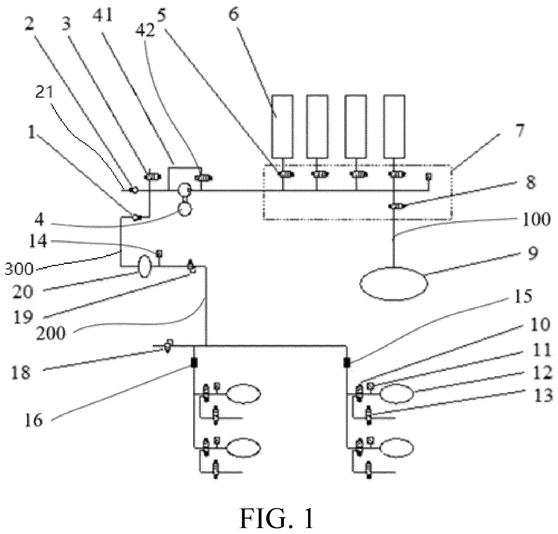

As shown in FIG. 1 to FIG. 2, the air generating unit is an air compressor 4. Both the first air storage unit 9 and the second air storage unit 20 are air storage tanks. Under normal circumstances, the volume of the first air storage unit 9 is larger than that of the second air storage unit 20, and the air pressure in the first air storage unit 9 is higher than that in the second air storage unit 20. When the air pressure in the first air storage unit 9 is lower than the set value, the air generating device is activated to supply air to the first air storage device.

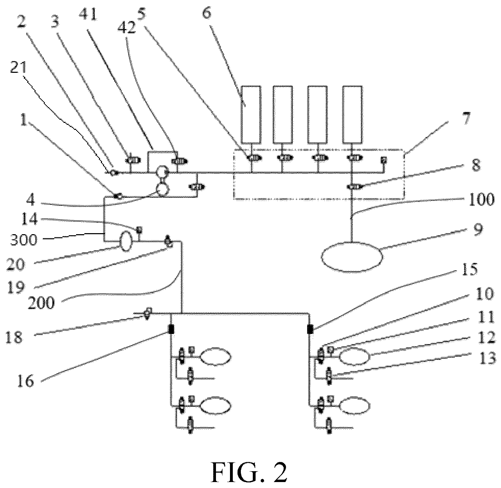

When the air pressure in the second air storage unit 20 is lower than the set value, there are two options. One is that the air generating device is activated to supply air to the second air storage unit 20, as shown in FIG. 1. The other is that the first air storage unit 9 is opened to supply air to the second air storage unit 20, as shown in FIG. 2.

In this example, since the air pressure in the second air storage unit 20 is lower than that in the first air storage unit 9, the first air storage unit 9 can also supply air to the second air storage unit 20. Compared with the way of the air compressor 4 supplying air to the second air storage unit 20, because the first air storage unit 9 has a large volume, it can supply air to the second air storage unit 20 in time, avoiding the problems of frequent opening and closing of the air generating unit and the inability to provide sufficient air volume in a short time. It should be noted that in the examples shown in FIG.1 to FIG.2, the first pipeline 100 comprises the pipeline connecting the air compressor 4 to the suspension device and the pipeline connecting the first air storage unit 9 to the suspension device.

In other examples, the air generating unit can be, but is not limited to, an air compressor 4, a nitrogen compressor, an inert gas compressor, an air storage unit, etc. The air generating unit can also be a nitrogen generator, which is used to prepare nitrogen. The air generating unit can also comprise a nitrogen generator and a nitrogen compressor. The nitrogen compressor is used to pressurize the nitrogen prepared by the nitrogen generator and supply it to the seat adjusting device or the suspension device.

In one embodiment, as shown in FIG.1, the first air receiving device is a suspension device, and the second air receiving device is a seat adjusting device. The air supply device supplies air to the first air receiving device through the first pipeline 100 and supplies air to the second air receiving device through the second pipeline 200. A distribution valve is arranged between the first air storage unit and the suspension device.

The distribution valve 7 is used to control the opening and closing of the suspension device and the first air storage unit 9. For example, the suspension device comprises multiple air springs 6, such as four. The distribution valve 7 comprises four air spring solenoid valves 5 corresponding to the air springs 6 and a storage unit solenoid valve 8 corresponding to the first air storage unit 9. When lifting the vehicle body, the air spring solenoid valves 5 and the storage unit solenoid valve 8 are opened, and the high-pressure air in the first air storage unit 9 enters the four air springs 6, thereby increasing the height of the vehicle body. When it is necessary to lower the vehicle body, the storage unit solenoid valve 8 is closed to facilitate the deflation of the air in the air springs 6 outside the vehicle compartment. The vehicle compartment can be, for example, the cockpit or the luggage compartment.

In one example, a pressure limiting valve group is arranged between the second air storage unit 20 and the seat adjusting device. The pressure limiting valve group is installed on the second pipeline 200. The pressure limiting valve group can control the air pressure downstream of the pressure limiting valve group on the second pipeline 200 to meet the working requirements of the seat adjusting device.

In one example, as shown in FIG. 1, the pressure limiting valve group comprises a first pressure limiting valve 19 and a second pressure limiting valve 18. The first pressure limiting valve 19 is arranged on the second pipeline 200. The second pipeline 200 comprises an exhaust branch pipe, and the second pressure limiting valve 18 is arranged on the exhaust branch pipe.

In this example, the air pressure in the second air storage unit 20 is higher than the operating pressure of the seat adjusting device. In order to match the operating pressure of the seat adjusting device, a first pressure limiting valve 19 is installed on the second pipeline 200. Those skilled in the art can select the specification of the first pressure limiting valve 19 according to the air pressure in the second air storage unit 20 and the operating pressure of the seat adjusting device. The exhaust branch pipe is used for exhausting the air in the second pipeline 200. For example, the second pressure limiting valve 18 is a solenoid valve or a pneumatic valve. When the second pipeline 200 is exhausting air, the second pressure limiting valve 18 is opened, so that the air in the airbag can be quickly exhausted. The method of setting the second pressure limiting valve 18 on the second pipeline 200 for exhausting air can achieve faster air exhaust.

In addition, due to the installation of the exhaust branch pipe and the second pressure limiting valve 18, in the case that the first pressure limiting valve 19 fails, the high-pressure air can also be relieved of pressure through the second pressure limiting valve 18 to avoid damage to the seat adjusting device caused by excessive air pressure.

In one example, a pressure regulating valve group is arranged on the second pipeline 200, and the pressure regulating valve group is used to regulate the air pressure of the seat adjusting device. The seat adjusting device comprises an airbag. The inflation, deflation, and pressure maintenance of the airbag are controlled by the pressure regulating valve group.

In one example, the pressure regulating valve group comprises a first valve and a second valve. The first valve has a first end, a second end, and a third end. The first end is connected to the air supply device, the second end is connected to the seat adjusting device, the third end is connected to the first exhaust pipeline, and the second valve is arranged on the first exhaust pipeline to control the opening and closing of the first exhaust pipeline. Any two of the first end, the second end, and the third end are selectively connected.

The first valve and the second valve can be solenoid valves, pneumatic valves, etc. As shown in FIG. 1, the first valve is an intake solenoid valve 10, and the second valve is an exhaust solenoid valve 13. The seat adjusting device comprises a driver's seat adjusting mechanism and a front passenger seat adjusting mechanism. A driver's control valve 15 and a front passenger control valve 16 are installed on the second pipeline 200 to control the air circuits of the driver's seat adjusting mechanism and the front passenger seat adjusting mechanism respectively. Certainly, the driver's control valve 15 and the front passenger control valve 16 can also not be installed to simplify the seat adjusting device.

Both the driver's seat adjusting mechanism and the front passenger seat adjusting mechanism comprise airbags. For example, the airbag comprises a left side wing airbag 12 opposite to the position of the left side wing of the seat and a right side wing airbag opposite to the position of the right side wing of the seat. The left side wing airbag 12 and the right side wing airbag adjust the angles, heights, etc. of the left side wing and the right side wing of the seat respectively, thereby reducing the body inclination of the occupant.

Take the left side wing airbag 12 of the driver's seat adjusting mechanism as an example for explanation. When the vehicle turns right, the occupant inclines to the left. At this time, the driver's control valve 15 and the intake solenoid valve 10 are opened, and the exhaust solenoid valve 13 is closed. The high-pressure air in the second air storage unit 20 passes through the first pressure limiting valve 19, the driver's control valve 15, and the intake solenoid valve 10 to reach the left side wing airbag 12. After the left side wing airbag 12 is inflated, it expands, thus changing the angle of the left side wing to support the occupant and reduce the leftward inclination of the occupant. When the air pressure in the left side wing airbag 12 reaches the set value, the intake solenoid valve 10 is closed, and the left side wing airbag 12 maintains the pressure. When the vehicle turns to drive straight, the driver resumes an upright sitting posture. At this time, the exhaust solenoid valve 13 is opened to deflate the left side wing airbag 12. The volume of the left side wing airbag 12 shrinks and the left side wing returns to its initial state.

In this example, the structure of the first valve can simplify the connection mode of the second valve, making it convenient for the assembly and disassembly of the seat adjusting device.

In one example, as shown in FIG. 1, the air generating unit is connected to the first pipeline 100, and the air generating unit is connected to the second air storage unit through the third pipeline 300; it further comprises a communicating pipeline 41 connecting the first pipeline 100 and the third pipeline 300. A communicating valve 42 is arranged on the communicating pipeline 41 and the first air storage unit 9 supplies air to the second air storage unit 20 through the first pipeline 100, the communicating pipeline 41, and the third pipeline 300.

In this example, the first pipeline 100 and the third pipeline 300 are demarcated by the air generating unit, such as the air compressor 4. The second pipeline 200 and the third pipeline 300 are divided by the second air storage unit 20. As shown in FIG. 1, the air outlet of the air generating unit is connected to the first pipeline 100. The air generating unit can supply air to the suspension device and the first air storage unit 9 through the first pipeline 100. The third pipeline 300 is used for supplying air to the second air storage unit 20, exhausting air from the suspension device, etc.

The communicating pipeline 41 connects the first pipeline 100 and the third pipeline 300. This allows the suspension device to exhaust air and the first air storage unit 9 to supply air to the second air storage unit 20 without passing through the air compressor 4. A communicating valve 42 is installed on the communicating pipeline 41, and the communicating valve 42 is an electric valve or a pneumatic valve. The on-off of the communicating pipeline 41 is controlled by the communicating valve 42. When the first air storage unit 9 supplies air to the second air storage unit 20, the first air storage unit 9 supplies air to the second air storage unit 20 through the first pipeline 100, the communicating pipeline 41, and the third pipeline 300.

In one example, the third pipeline 300 is connected to a second exhaust pipeline, and the suspension device exhausts air through the first pipeline 100, the communicating pipeline 41, the third pipeline 300, and the second exhaust pipeline.

For example, the second exhaust pipeline is a branch pipeline connected to the third pipeline 300, and a relief valve 3 is installed on the second exhaust pipeline. The relief valve 3 is an electric valve or a pneumatic valve. Exhaust is carried out by controlling the opening of the relief valve 3.

In one example, the second exhaust pipeline is connected to the suspension device, and the exhaust port of the second exhaust pipeline is adapted to exhaust the air outside the vehicle compartment.

It can be that the second exhaust pipeline is directly connected to the suspension device; or the second exhaust pipeline is indirectly connected to the suspension device. For example, the above-mentioned suspension device is connected through the first pipeline 100, the communicating pipeline 41, the third pipeline 300, and the second exhaust pipeline.

For example, as shown in FIG. 1, a second exhaust pipeline is connected to the third pipeline 300, a relief valve 3 is installed on the second exhaust pipeline, and the relief valve 3 is located outside the cockpit. The relief valve 3 is a solenoid valve, a pneumatic valve, etc. The relief valve 3 can exhaust the air exhausted from the suspension device. The air exhausted from the suspension device reaches the second exhaust pipeline through the first pipeline 100, the communicating pipeline 41, and the third pipeline 300, and then is exhausted outside the cockpit, avoiding the adverse impact of the above-mentioned air on the air environment of the cockpit.

In one example, as shown in FIG. 1, a first check valve 2 is installed on the inlet pipe 21. The first check valve 2 is configured to allow the air to flow towards the air supply device.

For example, one end of the third pipeline 300 is connected to the inlet pipe 21, and the other end of the third pipeline 300 is connected to the air intake of the air compressor 4. The first check valve 2 does not allow the air to flow in the reverse direction. In this way, the air on the side of the first check valve 2 close to the air compressor will not be exhausted through the inlet pipe 21.

In one example, as shown in FIG. 1, a second check valve 1 is installed on the third pipeline 300, and the second check valve 1 is configured to allow the air to flow towards the second air storage unit 20.

In this example, the second check valve 1 allows the air to enter the second air storage unit 20, but does not allow the air in the second air storage unit 20 to enter the air compressor 4, the suspension device, or the first air storage unit 9. In this way, it can effectively prevent the air in the second air storage unit 20 from being exhausted when the relief valve 3 is opened.

The installation of the first check valve 2 and the second check valve 1 can automatically adjust the air intake and exhaust of the integrated adjusting system. When intaking air, the external atmospheric pressure is greater than the air pressure in the third pipeline 300. At this time, under the action of the pressure difference, the first check valve 2 automatically opens, and the second check valve 1 is in an automatically closed state because its directionality and pressure difference do not meet the opening conditions, and the air enters the air compressor 4 through the inlet pipe 21 and the third pipeline 300. When supplying air to the second air storage unit 20, the air pressure upstream of the second check valve 1 is greater than the air pressure downstream of the second check valve 1. Under the action of the pressure difference, the second check valve 1 automatically opens, and the first check valve 2 is in an automatically closed state because it does not meet the directionality and pressure difference opening conditions, and the air reaches the second air storage unit 20 through the third pipeline 300. This installation method can simplify the pipeline design of the air compressor 4.

In one example, as shown in FIG. 1, the suspension device comprises multiple air springs 6, and the multiple air springs 6 are respectively connected to the air supply device.

The multiple air springs 6 are distributed at different positions of the vehicle body. For example, the air springs 6 correspond to the positions of the wheels. This makes the adjustment of the height of the vehicle body smoother and more uniform. Each air spring 6 is controlled for air intake, exhaust, and pressure maintenance by an air spring solenoid valve 5. The storage unit solenoid valve 8 is used to control the air supply, exhaust, and pressure maintenance of the first air storage unit 9.

When the first air storage unit 9 is being inflated, the air compressor 4 is turned on, the communicating valve 42 and multiple air spring solenoid valves 5 are closed, and the storage unit solenoid valve 8 is opened. The air enters the air compressor 4 through the inlet pipe 21 and a part of the third pipeline 300. The air compressed by the air compressor 4 inflates the first air storage unit 9 through the first pipeline 100.

When the air pressure in the first air storage unit 9 reaches the first set air pressure, the storage unit solenoid valve 8 is closed, and the air compressor 4 is turned off, so that the first air storage unit 9 maintains the pressure.

When it is necessary to raise the height of the vehicle body, the communicating valve 42 is closed, the air spring solenoid valves 5 and the storage unit solenoid valve 8 are opened, and the high-pressure air in the first air storage unit 9 enters the air springs 6 through the first pipeline 100, thus raising the height of the vehicle body.

When it is necessary to lower the height of the vehicle body, the storage unit solenoid valve 8 is closed, the air spring solenoid valves 5 and the communicating valve 42 are opened, and the air in the air springs 6 is exhausted through the first pipeline 100, the communicating pipeline 41, a part of the third pipeline 300, and the second exhaust pipeline.

The multiple air spring solenoid valves 5 and the storage unit solenoid valve 8 form an assembly. This configuration makes the suspension device more integrated and facilitates its installation and disassembly.

In one example, as shown in FIG. 1, the second air storage unit 20 is connected to the first air storage unit 9, and the air pressure in the second air storage unit 20 is lower than that in the first air storage unit 9.

In this example, since the air pressure in the second air storage unit 20 is lower than that in the first air storage unit 9, the first air storage unit 9 can supply air to the second air storage unit 20. Compared with the way of the air compressor 4 supplying air to the second air storage unit 20, because the first air storage unit 9 has a large volume, it can supply air to the second air storage unit 20 in time, avoiding the problems of frequent opening and closing of the air compressor 4 and the inability to provide sufficient air volume in a short time.

As shown in FIG. 1, the second air storage unit 20 is connected to the first air storage unit 9 through the third pipeline 300, the communicating pipeline 41, and the first pipeline 100. With this connection method, by using the original pipelines, the first air storage unit 9 can supply air to the second air storage unit 20 only by controlling the opening and closing of the valves.

In one example, as shown in FIG. 1, the first air storage unit 9 supplies air to the second air storage unit 20 through the first pipeline 100, the communicating pipeline 41, and the third pipeline 300.

In this example, the communicating pipeline crosses the air compressor 4 to connect the first pipeline 100 and the third pipeline 300. This can avoid the air from entering the air compressor 4. It should be noted that when the first air storage unit 9 supplies air to the second air storage unit 20, the air compressor stops supplying air to the first pipeline 100.

In one example, as shown in FIG. 1, when the air pressure in the second air storage unit 20 is lower than the set value, the storage unit solenoid valve 8 and the communicating valve 42 are opened.

In this way, the storage unit solenoid valve 8 and the communicating valve 42 can effectively control the air supply from the first air storage unit 9 to the second air storage unit 20.

In one example, as shown in FIG. 1, a first pressure sensor 14 is installed on the second pipeline 200, and the first pressure sensor 14 is used to sense the air pressure in the second air storage unit 20.

When the air pressure in the second air storage unit 20 is lower than the second set air pressure, the air compressor 4 or the first air storage unit 9 supplies air to the second air storage unit 20.

In one example, the integrated control system further comprises a control device. The control device is used to control the inflation, exhaust, and pressure maintenance of the suspension device, the first air storage unit 9, and the seat adjusting device.

For example, the control device is a controller, such as the controller of the vehicle or a controller dedicated to the integrated adjusting device. This controller can control the opening and closing of the air spring solenoid valve 5, the storage unit solenoid valve 8, the intake solenoid valve 10, the exhaust solenoid valve 13, the communicating valve 42, the relief valve 3, the second pressure limiting valve 18, etc.

In one example, the air supply device is arranged with a spare interface. The spare interface is used to connect with other devices except the first air receiving device and the second air receiving device. For example, other devices can be, but are not limited to, air dust removal devices and air pumps outside the vehicle. In this example, the spare interface can supply air to other devices, thus meeting various air usage requirements.

According to another embodiment of the present disclosure, a vehicle is provided. The vehicle comprises the above-mentioned integrated adjusting system.

This vehicle has the characteristic of high integration degree and can realize the adjustment of the seat and the height of the vehicle body.
(1) Height adjustment of the vehicle body in a static state: It is used to automatically adjust the height of the vehicle body according to the number of occupants in the vehicle or the vehicle's mass, so as to maintain the required height for the vehicle's driving and the stability of the vehicle's driving state. The height adjustment of the vehicle body can be the height adjustment of the air springs 6 corresponding to all the wheels of the vehicle; it can also be the height adjustment of only the air spring 6 corresponding to one wheel.

Working conditions for adjusting the height of the air springs 6 corresponding to all the wheels of the vehicle: When it is necessary to raise the vehicle body, the communicating valve 42 is closed, the four air spring solenoid valves 5 corresponding to the air springs 6 and the storage unit solenoid valve 8 corresponding to the first air storage unit 9 in the distribution valve 7 are opened, and the high-pressure air in the first air storage unit 9 enters the four air springs 6, thereby increasing the height of the vehicle body. When it is necessary to lower the vehicle body, the storage unit solenoid valve 8 is closed, the communicating valve 42 is opened, and the air in the air springs 6 is exhausted outside the cockpit through the relief valve 3.

Working conditions for adjusting the height of the air spring 6 corresponding to one wheel: Open the air spring solenoid valve 5 and the storage unit solenoid valve 8 corresponding to the wheel that needs to be raised. At this time, the high-pressure air in the first air storage unit 9 enters the air spring 6 corresponding to this air spring solenoid valve 5, and this air spring 6 extends, thus raising the part of the vehicle body corresponding to this wheel. When it is necessary to lower the vehicle body, the storage unit solenoid valve 8 is closed, the communicating valve 42 is opened, and the air in the air spring 6 is exhausted outside the cockpit through this air spring solenoid valve 5, the communicating valve 42, and the relief valve 3.

(2) Control of the vehicle body height during vehicle driving: It is used to improve the directional stability of the vehicle when driving at a high speed. When the controller determines that the vehicle speed of the vehicle driving in a straight line reaches or exceeds the set vehicle speed, it sends out a control signal to increase the damping force of the electronically controlled shock absorber. At the same time, it controls the distribution valve 7 to exhaust the air springs 6 to lower the height of the vehicle body, thereby reducing the air resistance, lowering the center of gravity of the vehicle body, and improving the handling stability during high-speed driving. At this time, the communicating valve 42 and all the air spring solenoid valves 5 are opened, and the air in the air springs 6 is exhausted outside the cockpit through the air spring solenoid valves 5, the communicating valve 42, and the relief valve 3 to lower the height of the vehicle body.

When the vehicle speed of the vehicle driving in a straight line drops below the set vehicle speed, the communicating valve 42 is closed, the storage unit solenoid valve 8 and all the air spring solenoid valves 5 are opened to inflate the four air springs 6 to raise the height of the vehicle body.

(3) Overload protection of the suspension device: Set the maximum allowable air pressure of the suspension device in the ECU. If the air pressure of the air spring 6 is greater than or equal to the maximum allowable air pressure, the air spring 6 is deflated, and the height of the vehicle body is lowered. At this time, the communicating valve 42 and all the air spring solenoid valves 5 are opened, and the air in the air spring 6 is exhausted outside the cockpit through the air spring solenoid valves 5, the communicating valve 42, and the relief valve 3 to lower the height of the vehicle body.

If it is necessary for the vehicle to return to the normal state, for example, when the air pressure of the air spring 6 is less than the maximum allowable air pressure, the load of the vehicle needs to be reduced, such as unloading the overloaded goods. When the air pressure of the air spring 6 is lower than the maximum allowable air pressure and the vehicle is restarted, the vehicle will return to the normal state.

(4) Support of the seat side wings during steering: It is used to improve the lateral stability of the occupants in the vehicle relative to the seat when the vehicle body is subjected to lateral force. When the vehicle is turning, for example, when at least one of the lateral acceleration, the lateral roll angle, and the lateral roll angular velocity is greater than or equal to the set value, the driver's control valve 15 and the corresponding intake solenoid valve 10 are opened, and the exhaust solenoid valve 13 is closed. The high-pressure air in the second air storage unit 20 enters the airbag, such as the left side wing airbag 12, through the first pressure limiting valve 19, the driver's control valve 15, and the corresponding intake solenoid valve 10 to support the waist of the occupant and prevent the occupant from tilting; when at least one of the lateral acceleration, the lateral roll angle, or the lateral roll angular velocity of the vehicle is less than the set value, the intake solenoid valve 10 is closed, the exhaust solenoid valve 13 is opened, and the air in the airbag (such as the left side wing airbag 12) is exhausted outside the cockpit, and the left side wing of the seat no longer provides support.

It should be noted that in the above various usage modes, the opening and closing of different valves are controlled and completed by the controller. When the suspension device is working, the first air storage unit 9 only supplies air to the suspension device and stops supplying air to the seat adjusting device; when the seat adjusting device is working, the second air storage unit 20 only supplies air to the seat adjusting device, and the first air storage unit 9 or the air compressor 4 stops supplying air to the second air storage unit 20.

According to another embodiment of the present disclosure, a vehicle is provided. The vehicle comprises the above-mentioned integrated adjusting system. A first pressure limiting valve 19 is installed on the second pipeline 200, the seat adjusting device comprises an airbag, the airbag is located behind the side wing of the seat, the airbag is connected to the second pipeline 200, and a first valve and a second valve are installed on the second pipeline 200. The first valve can control the air intake of the airbag, and the second valve is used to control the exhausting of air from the airbag;

When a signal indicating that the vehicle is turning is obtained, the first pressure limiting valve and the intake valve are opened to inflate the airbag behind the side wing on the tilted side.

In this example, the intake valve is the intake solenoid valve 10, and the exhaust valve is the exhaust solenoid valve 13. When the vehicle turns right, the occupant's body tilts to the left. After the controller receives the right-turn signal, it sends out a control signal to open the driver's control valve 15 and the corresponding intake solenoid valve 10 and close the exhaust solenoid valve 13. The high-pressure air in the second air storage unit 20 enters the airbag, such as the left side wing airbag 12, through the first pressure limiting valve 19, the driver's control valve 15, and the corresponding intake solenoid valve 10 to support the waist of the occupant and prevent the occupant from tilting. In one example, when a signal indicating that the vehicle is no longer turning is obtained, the second valve is opened.

For example, when the controller obtains the signal that the vehicle is driving straight or the vehicle has stopped, it sends out a control signal to open the exhaust solenoid valve 13, the left side wing airbag 12 exhausts air, and the left side wing returns to its initial state.

The signal comprises at least one of the lateral acceleration, the lateral roll angle, or the lateral roll angular velocity. The above signals enable the controller to accurately determine the state of the vehicle and precisely control the operation of the integrated adjusting system.

In the description of this specification, the description of the reference terms "an embodiment", "some embodiments", "an example", "a specific example", "some examples", and the like means that specific features, structures, materials or characteristics described in combination with the embodiment(s) or example(s) are comprised in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. In addition, those skilled in the art may combine the different embodiments or examples and the features of the different embodiments or examples described in this specification without contradiction.

Although the embodiments of the present disclosure have been shown and described above, it can be understood that the above embodiments are exemplary and cannot be understood as limitations on the present disclosure. Those skilled in the art can change, modify, replace and modify the above embodiments within the scope of the present disclosure.

## Claims

1. An integrated adjusting system, the integrated adjusting system being applied to a vehicle comprising:
a first air receiving device and a second air receiving device, the first air receiving device being configured to implement a first function, the second air receiving device being configured to implement a second function, the first function and the second function being different;
an air supply device, the air supply device being connected to the first air receiving device so as to supply air to the first air receiving device, the air supply device being connected to the second air receiving device so as to supply air to the second air receiving device, the air supply device being connected to an air inlet pipe, and the air inlet pipe being suitable for drawing air from the inside of a vehicle compartment.

2. The integrated adjusting system according to claim 1, wherein the first air receiving device is one of a suspension device, a seat adjusting device, and a tire inflation device;
the second air receiving device is one of a suspension device, a seat adjusting device, and a tire inflation device.

3. The integrated adjusting system according to claim 1 or 2, wherein in a first state, the air supply device is configured to supply air to the first air receiving device;
in a second state, the air supply device is configured to supply air to the second air receiving device;
in a third state, the air supply device is configured to supply air to the first air receiving device and the second air receiving device.

4. The integrated adjusting system according to any one of claims 1 to 3, wherein the air supply device comprises an air generating unit and a first air storage unit, and the air generating unit is configured to supply air to the first air storage unit to ensure that the first air storage unit supplies air to the first air receiving device and/or the second air receiving device.

5. The integrated adjusting system according to any one of claims 1 to 3, wherein the air supply device comprises an air generating unit, a first air storage unit and a second air storage unit, the air generating unit is configured to supply air to the first air storage unit, and the air generating unit or the first air storage unit is configured to supply air to the second air storage unit.

6. The integrated adjusting system according to claim 5, wherein the first air receiving device is a suspension device, the second air receiving device is a seat adjusting device, the air supply device supplies air to the first air receiving device through a first pipeline, the air supply device supplies air to the second air receiving device through a second pipeline, and a distribution valve is arranged between the first air storage unit and the suspension device.

7. The integrated adjusting system according to claim 6, wherein a pressure limiting valve group is arranged between the second air storage unit and the seat adjusting device.

8. The integrated adjusting system according to claim 7, wherein the pressure limiting valve group comprises a first pressure limiting valve and a second pressure limiting valve, the first pressure limiting valve is arranged on the second pipeline, the second pipeline comprises an exhaust branch pipe, and the second pressure limiting valve is arranged on the exhaust branch pipe.

9. The integrated adjusting system according to any one of claims 6 to 8, wherein a pressure regulating valve group is arranged on the second pipeline, and the pressure regulating valve group is used to regulate the air pressure of the seat adjusting device.

10. The integrated adjusting system according to claim 9, wherein the pressure regulating valve group comprises a first valve and a second valve, the first valve has a first end, a second end and a third end, the first end is connected to the air supply device, the second end is connected to the seat adjusting device, the third end is connected to a first exhaust pipeline, the second valve is arranged on the first exhaust pipeline to control the opening and closing of the first exhaust pipeline, and any two of the first end, the second end and the third end are selectively connected.

11. The integrated adjusting system according to any one of claims 6 to 10, wherein the air generating unit is connected to the first pipeline, and the air generating unit is connected to the second air storage unit through a third pipeline;
further comprising a communicating pipeline connecting the first pipeline and the third pipeline, a communicating valve being arranged on the communicating pipeline, and the first air storage unit suppling air to the second air storage unit through the first pipeline, the communicating pipeline and the third pipeline.

12. The integrated adjusting system according to claim 11, wherein the third pipeline is connected to a second exhaust pipeline and the suspension device exhausts air through the first pipeline, the communicating pipeline, the third pipeline and the second exhaust pipeline.

13. The integrated adjusting system according to claim 11, wherein the first air storage unit supplies air to the second air storage unit through the first pipeline, the communicating pipeline and the third pipeline.

14. The integrated adjusting system according to any one of claims 6 to 13, wherein further comprising a second exhaust pipeline, the second exhaust pipeline is connected to the suspension device, and the exhaust outlet of the second exhaust pipeline is suitable for deflating air outside the vehicle compartment.

15. The integrated adjusting system according to any one of claims 6 to 14, wherein the second air storage unit is connected to the first air storage unit, and the air pressure of the second air storage unit is lower than that of the first air storage unit.

16. The integrated adjusting system according to any one of claims 1 to 15, wherein a first check valve is arranged on the inlet pipe and the first check valve is configured to allow air to flow to the air supply device.

17. The integrated adjusting system according to any one of claims 1 to 16, wherein a spare interface is arranged with the air supply device .

18. A vehicle, a vehicle comprising the integrated adjusting system according to any one of claims 1 to 17.
